# EUROPEAN PATENT APPLICATION

(11) **EP 3 764 688 A1**
(43) Date of publication of application: **13.01.2021**
(21) Application number: 18913560.1
(22) Date of filing: 04.04.2018
(51) Int. Cl.: H04W 28/20

(54) **COMMUNICATION METHOD AND DEVICE**

(71) Applicant: HUAWEI TECHNOLOGIES CO., LTD., Shenzhen, Guangdong 518129 (CN)
(72) Inventor: LIU, Yifan, Shenzhen, Guangdong 518129 (CN); HAN, Jing, Shenzhen, Guangdong 518129 (CN); ZHANG, Meng, Shenzhen, Guangdong 518129 (CN); LI, Hong, Shenzhen, Guangdong 518129 (CN); LI, Qiming, Shenzhen, Guangdong 518129 (CN)
(74) Representative: Maiwald Patent- und Rechtsanwaltsgesellschaft mbH
(86) International application number: PCT/CN2018/082002
(87) International publication number: WO 2019/191965

(57) **Abstract**

This application provides a communication method and an apparatus. The method includes: receiving, by a terminal apparatus, first information from a second base station, where the first information includes network-based cell-specific reference signal CRS bandwidth mitigation status information of a first base station, the second base station is a base station of a serving cell of the terminal apparatus, and the first base station is a base station of a neighboring cell of the serving cell; determining, by the terminal apparatus, a measurement bandwidth value based on at least the first information; and measuring, by the terminal apparatus based on the measurement bandwidth value, at least one of signal strength or signal quality of the serving cell in which the terminal apparatus is located or the neighboring cell of the serving cell. In the method, the second base station may send the network-based CRS bandwidth mitigation status information of the first base station to the terminal, thereby implementing synchronization of the bandwidth mitigation status information between the first base station and the terminal. Further, the terminal can re-determine the measurement bandwidth value based on the bandwidth mitigation status information, and perform cell measurement based on the re-determined measurement bandwidth value, so that measurement overheads of the terminal can be reduced.

## Description

### TECHNICAL FIELD

This application relates to the field of mobile communications technologies, and in particular, to a communication method and an apparatus.

### BACKGROUND

In the prior art, a density of cell-specific reference signals (cell reference signal, CRS) is relatively high, and a considerable part of resources are occupied in medium- and low-load cells, consequently causing some interference to a neighboring cell. Therefore, currently, a technology of network-based cell-specific reference signal mitigation (network-based cell reference signal mitigation, network-based CRS mitigation) is proposed. This technology conditionally mitigates a CRS bandwidth of a cell, thereby reducing, to some extent, the interference caused by the medium- and low-load cells to the neighboring cell.

When the technology is used, a base station or a terminal cannot learn of mitigation information of a base station during network-based cell-specific reference signal mitigation.

### SUMMARY

This application provides a communication method and an apparatus, to synchronize mitigation information that is of a base station during network-based cell-specific reference signal mitigation and that is between base stations or between the base station and a terminal.

According to a first aspect, this application provides a communication method, including: receiving, by a terminal apparatus, first information from a second base station, where the first information includes network-based cell-specific reference signal CRS bandwidth mitigation status information of a first base station, the second base station is a base station of a serving cell of the terminal apparatus, and the first base station is a base station of a neighboring cell of the serving cell; determining, by the terminal apparatus, a measurement bandwidth value based on at least the first information; and measuring, by the terminal apparatus based on the measurement bandwidth value, at least one of signal strength or signal quality of the serving cell in which the terminal apparatus is located or the neighboring cell of the serving cell.

In the foregoing communication method, the second base station may send the network-based cell-specific reference signal CRS bandwidth mitigation status information of the first base station to the terminal, thereby implementing synchronization of the bandwidth mitigation status information between the first base station and the terminal. Further, the terminal can re-determine the measurement bandwidth value based on the bandwidth mitigation status information, and perform cell measurement based on the re-determined measurement bandwidth value, so that measurement overheads of the terminal can be reduced.

In a possible implementation, the determining, by the terminal apparatus, a measurement bandwidth value based on at least the first information includes: when the network-based CRS bandwidth mitigation status information of the first base station indicates a bandwidth mitigation value, determining, by the terminal apparatus, the bandwidth mitigation value as the measurement bandwidth value; or when the network-based CRS bandwidth mitigation status information of the first base station indicates a mitigated state, determining, by the terminal apparatus, one of at least two bandwidth mitigation values corresponding to the mitigated state as the measurement bandwidth value.

In a possible implementation, the terminal apparatus receives network-based CRS bandwidth mitigation status information of the second base station from the second base station; and the determining, by the terminal apparatus, a measurement bandwidth value based on at least the first information includes: determining, by the terminal apparatus, the measurement bandwidth value based on the first information and the network-based CRS bandwidth mitigation status information of the second base station.

According to a second aspect, this application provides a communication method, including: sending, by a first base station, first information to a second base station, where the first information includes network-based cell-specific reference signal CRS bandwidth mitigation status information of the first base station, the second base station is a base station of a serving cell of a terminal apparatus, and the first base station is a base station of a neighboring cell of the serving cell.

According to the foregoing method, the first base station sends the network-based CRS bandwidth mitigation status information of the first base station to the second base station, thereby implementing synchronization of mitigation information between the first base station and the second base station.

In a possible implementation, the first base station sends the first information to the second base station when at least one of the following conditions is met: CRS configuration of the first base station changes; and the first base station receives first request information from the second base station, where the first request information is used to indicate the first base station to send the network-based CRS bandwidth mitigation status information of the first base station to the second base station.

In a possible implementation, the sending, by a first base station, first information to a second base station includes: periodically sending, by the first base station, the first information to the second base station.

In a possible implementation, the method further includes: sending, by the first base station, second information to the second base station, where the second information includes network-based CRS bandwidth mitigation capability information of the first base station.

In a possible implementation, the method further includes: receiving, by the first base station, second request information from the second base station, where the second request information is used to indicate the first base station to send the network-based CRS bandwidth mitigation capability information of the first base station to the second base station.

In a possible implementation, the method further includes: receiving, by the first base station, third information from the second base station, where the third information is used to notify that the first information is received.

In a possible implementation, the method further includes: receiving, by the first base station, fourth information from the second base station, where the fourth information is used to notify that the second information is received.

According to a third aspect, this application provides a communication method, including: receiving, by a second base station, first information from a first base station, where the first information includes network-based cell-specific reference signal CRS bandwidth mitigation status information of the first base station, the second base station is a base station of a serving cell of a terminal apparatus, and the first base station is a base station of a neighboring cell of the serving cell.

According to the foregoing method, the first base station sends the network-based CRS bandwidth mitigation status information of the first base station to the second base station, thereby implementing synchronization of mitigation information between the first base station and the second base station.

In a possible implementation, the receiving, by a second base station, first information from a first base station includes: sending, by the second base station, first request information to the first base station, where the first request information is used to indicate the first base station to send the network-based CRS bandwidth mitigation status information of the first base station to the second base station; and receiving, by the second base station, the first information from the first base station.

In a possible implementation, the method further includes: receiving, by the second base station, second information from the first base station, where the second information includes network-based CRS bandwidth mitigation capability information of the first base station.

In a possible implementation, the method further includes: sending, by the second base station, second request information to the first base station, where the second request information is used to indicate the first base station to send the network-based CRS bandwidth mitigation capability information of the first base station to the second base station.

In a possible implementation, the method further includes: sending, by the second base station, third information to the first base station, where the third information is used to notify that the first information is received.

In a possible implementation, the method further includes: sending, by the second base station, fourth information to the first base station, where the fourth information is used to notify that the second information is received.

In a possible implementation, the method further includes: sending, by the second base station, the first information to the terminal apparatus.

In a possible implementation, the method further includes: determining, by the second base station, a measurement bandwidth value based on at least the first information; and sending, by the second base station, the measurement bandwidth value to the terminal apparatus.

In a possible implementation, the determining, by the second base station, a measurement bandwidth value based on at least the first information includes: when the network-based CRS bandwidth mitigation status information of the first base station is a bandwidth mitigation value, determining, by the second base station, the bandwidth mitigation value as the measurement bandwidth value; or when the network-based CRS bandwidth mitigation status information of the first base station is a mitigated state, determining, by the second base station, one of a plurality of bandwidth mitigation values corresponding to the mitigated state as the measurement bandwidth value.

According to a fourth aspect, this application provides an apparatus. The apparatus may be a terminal or a chip. The apparatus has a function of implementing each embodiment of the first aspect. This function may be implemented by hardware, or may be implemented by hardware by executing corresponding software. The hardware or the software includes one or more modules corresponding to the foregoing function.

According to a fifth aspect, this application provides an apparatus, including a processor and a memory. The memory is configured to store an instruction. When the apparatus runs, the processor executes the instruction stored in the memory, to enable the apparatus perform the communication method according to any one of the first aspect or the implementations of the first aspect. It should be noted that the memory may be integrated into the processor, or may be independent of the processor.

According to a sixth aspect, this application provides an apparatus. The apparatus includes a processor. The processor is configured to: couple to a memory, read an instruction in the memory, and perform, according to the instruction, the communication method according to any one of the first aspect or the implementations of the first aspect.

According to a seventh aspect, this application provides an apparatus. The apparatus may be a base station or a chip. The apparatus has a function of implementing each embodiment of the second aspect. This function may be implemented by hardware, or may be implemented by hardware by executing corresponding software. The hardware or the software includes one or more modules corresponding to the foregoing function.

According to an eighth aspect, this application provides an apparatus, including a processor and a memory. The memory is configured to store an instruction. When the apparatus runs, the processor executes the instruction stored in the memory, to enable the apparatus perform the communication method according to any one of the second aspect or the implementations of the second aspect. It should be noted that the memory may be integrated into the processor, or may be independent of the processor.

According to a ninth aspect, this application provides an apparatus. The apparatus includes a processor. The processor is configured to: couple to a memory, read an instruction in the memory, and perform, according to the instruction, the communication method according to any one of the second aspect or the implementations of the second aspect.

According to a tenth aspect, this application provides an apparatus. The apparatus may be a base station or a chip. The apparatus has a function of implementing each embodiment of the third aspect. This function may be implemented by hardware, or may be implemented by hardware by executing corresponding software. The hardware or the software includes one or more modules corresponding to the foregoing function.

According to an eleventh aspect, this application provides an apparatus, including a processor and a memory. The memory is configured to store an instruction. When the apparatus runs, the processor executes the instruction stored in the memory, to enable the apparatus perform the communication method according to any one of the third aspect or the implementations of the third aspect. It should be noted that the memory may be integrated into the processor, or may be independent of the processor.

According to a twelfth aspect, this application provides an apparatus. The apparatus includes a processor. The processor is configured to: couple to a memory, read an instruction in the memory, and perform, according to the instruction, the communication method according to any one of the third aspect or the implementations of the third aspect.

According to a thirteenth aspect, this application provides a system, including the apparatus according to the seventh aspect, the eighth aspect, or the ninth aspect, and including the apparatus according to the tenth aspect, the eleventh aspect, or the twelfth aspect. Further, the system may further include the apparatus according to the fourth aspect, the fifth aspect or the sixth aspect.

According to a fourteenth aspect, this application further provides a computer-readable storage medium. The computer-readable storage medium stores a program or an instruction, and when the program or the instruction is run on a computer, the computer is enabled to perform the methods according to the foregoing aspects.

According to a fifteenth aspect, this application further provides a computer program product including an instruction. When the computer program product runs on a computer, the computer is enabled to perform the methods according to the foregoing aspects.

### BRIEF DESCRIPTION OF DRAWINGS

FIG. 1 is a schematic diagram of a possible network architecture according to this application;
FIG. 2 is a schematic diagram of a communication method according to this application;
FIG. 3 is a schematic diagram of another communication method according to this application;
FIG. 4 is a schematic diagram of an apparatus according to this application;
FIG. 5 is a schematic diagram of another apparatus according to this application; and
FIG. 6 is a schematic diagram of another apparatus according to this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the description of this application, unless otherwise stated, "a plurality" means two or more than two.

The following further describes this application in detail with reference to the accompanying drawings. A specific operation method in a method embodiment may also be applied to an apparatus embodiment or a system embodiment. In the description of this application, unless otherwise stated, "a plurality" means two or more than two.

It should be noted that communication methods in this application may be performed by an apparatus. The apparatus may be an apparatus on a network side and/or an apparatus on a terminal side. On the network side, the apparatus may be a base station or a chip in a base station, that is, the base station or the chip in the base station may perform the communication methods in this application. On the terminal side, the apparatus may be a terminal or a chip in a terminal, that is, the terminal or the chip in the terminal may perform the communication methods in this application.

For ease of description, in this application, examples in which the apparatus is a base station or terminal are used to describe the communication methods. For an implementation in which the apparatus is a chip in the base station or a chip in the terminal, refer to specific descriptions of the communication methods performed by the base station or the terminal. Details are not described again.

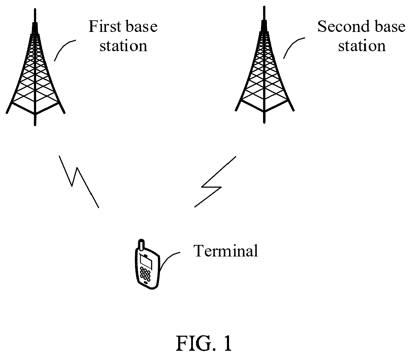

FIG. 1 is a schematic diagram of a possible network architecture according to this application, including a terminal, a first base station, and a second base station.

The second base station is a base station of a serving cell of the terminal. In other words, a cell served by the second base station is the serving cell of the terminal. The first base station is a base station of a neighboring cell of the serving cell of the terminal. In other words, one or more cells served by the first base station are neighboring cells of the serving cell of the terminal. In addition, the first base station and the second base station are different base stations.

The terminal may receive a control command and/or data from the second base station. Certainly, the terminal may also receive a control command and/or data from the first base station. For example, the terminal may receive broadcast information from the first base station.

The first base station and the second base station may communicate with each other over a wired connection, or may communicate with each other through an air interface.

In this application, the terminal is a device having a wireless transceiver function. The terminal may be deployed on land, and may be an indoor device, an outdoor device, a handheld device, or a vehicle-mounted device. The terminal may alternatively be deployed on water (for example, on a ship), or may be deployed in the air (for example, on a plane, balloon, or satellite). The terminal may be a mobile phone (mobile phone), a tablet (pad), a computer with a wireless transceiver function, a virtual reality (virtual reality, VR) terminal, an augmented reality (augmented reality, AR) terminal, or a wireless terminal used for industrial control (industrial control), self driving (self driving), telemedicine (remote medical), smart grid (smart grid), transportation safety (transportation safety), smart city (smart city), or smart home (smart home).

A base station is a device that provides a wireless communication function for a terminal, and may be but is not limited to a next generation NodeB (g nodeB, gNB) in 5G, an evolved NodeB (evolved node B, eNB), a radio network controller (radio network controller, RNC), a NodeB (node B, NB), a base station controller (base station controller, BSC), a base transceiver station (base transceiver station, BTS), a home base station (for example, a home evolved NodeB, or a home NodeB, HNB), a baseband unit (Base Band Unit, BBU), a transmission point (transmitting and receiving point, TRP), a transmission point (transmitting point, TP), or a mobile switching center.

In this application, the first base station is a base station having a network-based CRS bandwidth mitigation capability. With the network-based CRS bandwidth mitigation capability, when sending a CRS, the first base station may send the CRS on a part of a bandwidth (that is, a bandwidth after mitigation). In this way, resources can be saved by reducing occupation of bandwidth resources, and interference to a neighboring cell can further be reduced. For example, the first base station occupies a bandwidth of 20 RBs in total. For example, if the first base station uses the technology of network-based CRS mitigation, and the first base station may send a CRS on 6 RBs at the middle of the bandwidth, the 6 RBs herein may be referred to as a mitigated bandwidth.

For example, the second base station in this application may also have the network-based CRS bandwidth mitigation capability. For another example, the second base station in this application may not have the network-based CRS bandwidth mitigation capability.

For example, in an application scenario, the first base station is a next-generation base station and has the network-based CRS bandwidth mitigation capability; and the second base station is a last generation base station and does not have the network-based CRS bandwidth mitigation capability.

For another example, in another application scenario, both the first base station and the second base station are next-generation base stations, and therefore both have the network-based CRS bandwidth mitigation capability.

This application describes the communication methods in this application based on the network architecture shown in FIG. 1.

It may be understood that the foregoing function may be a network element in a hardware device, a software function running on dedicated hardware, or a virtualized function instantiated on a platform (for example, a cloud platform).

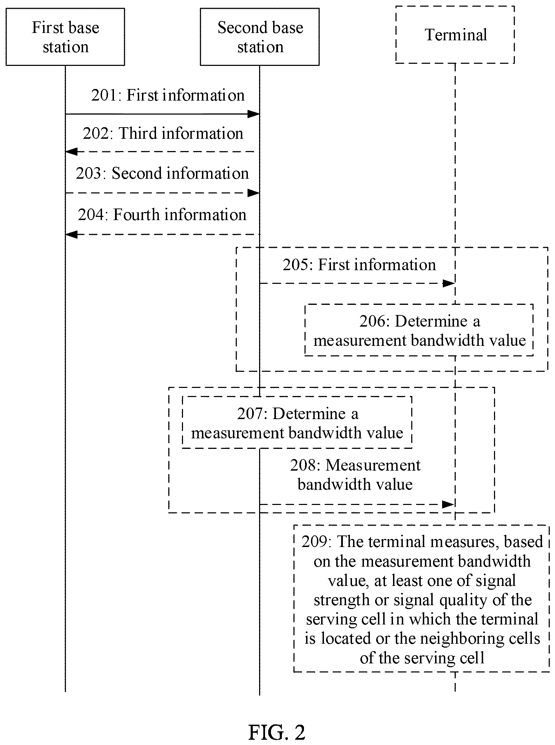

FIG. 2 shows a communication method provided in this application, and the method includes the following steps.

Step 201: A first base station sends first information to a second base station. Correspondingly, the second base station receives the first information.

The first information includes network-based CRS bandwidth mitigation status information of the first base station.

It should be noted that the first base station sends the network-based CRS bandwidth mitigation status information of the first base station to the second base station only when the first base station has a network-based CRS bandwidth mitigation capability.

For example, a current network-based CRS bandwidth mitigation status of the first base station is that a bandwidth used for CRS sending is mitigated to X. In an implementation, the status information may be represented as X. In another implementation, one bit may be used to indicate that the first base station is currently in a CRS bandwidth mitigated state. For example, " 1" is used to indicate that the first base station is currently in the CRS bandwidth mitigated state, that is, the status information is "1". Alternatively, "0" is used to indicate that the first base station is currently in the CRS bandwidth mitigated state, that is, the status information is 0.

For another example, a current network-based CRS bandwidth mitigation status of the first base station is that a bandwidth used for CRS sending is unmitigated. That is, the first base station sends a CRS by using the entire bandwidth. In an implementation, the status information may be represented as Y (Y herein refers to the entire bandwidth occupied by the first base station). In another implementation, one bit may be used to indicate that the first base station is currently in a CRS bandwidth mitigated state. For example, "1" is used to indicate that the first base station is currently in the CRS bandwidth unmitigated state, that is, the status information is "1". Alternatively, "0" is used to indicate that the first base station is currently in the CRS bandwidth unmitigated state, that is, the status information is 0.

According to the foregoing method, the first base station may send the network-based CRS bandwidth mitigation status information of the first base station to the second base station, so that the second base station can learn of the network-based CRS bandwidth mitigation status information of the first base station. Correspondingly, if the second base station also has the network-based CRS bandwidth mitigation capability, the second base station may send network-based CRS bandwidth mitigation status information of the second base station to the first base station. In this way, synchronization of mitigation information between the first base station and the second base station (for example, the network-based CRS bandwidth mitigation status information of the first base station or the network-based CRS bandwidth mitigation status information of the second base station) can be implemented.

In an implementation, a condition for triggering the first base station to send the first information to the second base station includes but is not limited to at least one of the following conditions.

Condition 1: CRS configuration of the first base station changes.

For example, if the network-based CRS bandwidth mitigation status of the first base station is updated from a state that the bandwidth used for CRS sending is mitigated to a state that the bandwidth used for CRS sending is unmitigated, it is determined that the CRS configuration changes.

For another example, if the network-based CRS bandwidth mitigation status of the first base station is updated from a state that the bandwidth used for CRS sending is unmitigated to a state that the bandwidth used for CRS sending is mitigated, it is determined that the CRS configuration changes.

When the first base station determines that the CRS configuration of the first base station changes, the first base station generates the network-based CRS bandwidth mitigation status information, and sends the network-based CRS bandwidth mitigation status information to the second base station.

Condition 2: The first base station receives first request information from the second base station, where the first request information is used to indicate the first base station to send the network-based CRS bandwidth mitigation status information of the first base station to the second base station.

In this manner, the second base station actively requests to obtain the network-based CRS bandwidth mitigation status information of the first base station from the first base station, and therefore, when receiving the first request information, the first base station generates the network-based CRS bandwidth mitigation status information, and sends the network-based CRS bandwidth mitigation status information to the second base station.

Condition 3: A sending period of the first base station arrives.

That is, the first base station periodically sends the network-based CRS bandwidth mitigation status information of the first base station to the second base station. Therefore, when the sending period arrives, the first base station generates the network-based CRS bandwidth mitigation status information, and sends the network-based CRS bandwidth mitigation status information to the second base station.

In an implementation, the method may further include the following step 202 after step 201.

Step 202: The second base station sends third information to the first base station. Correspondingly, the first base station receives the third information.

The third information is used to notify that the first information is received. That is, the third information may be understood as response information for receiving the first information, and is used to notify the first base station that the second base station has received the first information.

In an implementation, the method may further include the following step 203 after step 201.

Step 203: The first base station sends second information to the second base station. Correspondingly, the second base station receives the second information.

The second information includes network-based CRS bandwidth mitigation capability information of the first base station.

In an implementation, one bit may be used to indicate the network-based CRS bandwidth mitigation capability of the first base station. For example, if the first base station has the network-based CRS bandwidth mitigation capability, the network-based CRS bandwidth mitigation capability information of the first base station may be represented as "1". If the first base station does not have the network-based CRS bandwidth mitigation capability, the network-based CRS bandwidth mitigation capability information of the first base station may be represented as "0".

Alternatively, if the first base station has the network-based CRS bandwidth mitigation capability, the network-based CRS bandwidth mitigation capability information of the first base station is represented as "0". If the first base station does not have the network-based CRS bandwidth mitigation capability, the network-based CRS bandwidth mitigation capability information of the first base station is represented as "1".

In this application, the first base station has the network-based CRS bandwidth mitigation capability.

In an implementation, for example, a condition for triggering the first base station to send the second information to the second base station may be that the first base station receives second request information from the second base station, where the second request information is used to indicate the first base station to send the network-based CRS bandwidth mitigation capability information of the first base station to the second base station.

In this way, when the first base station receives the second request information from the second base station, the first base station sends the second information, that is, sends the network-based CRS bandwidth mitigation capability information of the first base station, to the second base station.

In an implementation, the method may further include the following step 204 after step 203.

Step 204: The second base station sends fourth information to the first base station. Correspondingly, the first base station receives the fourth information.

The fourth information is used to notify that the second information is received. That is, the fourth information may be understood as response information for receiving the second information, and is used to notify the first base station that the second base station has received the second information.

It should be noted that, in an implementation, step 201 and step 203 may be combined into one step. For example, the first base station sends both the first information and the second information to the second base station by using one message. Correspondingly, step 202 and step 204 may also be combined into one step, that is, the second base station may send both the third information and the fourth information to the first base station by using one message.

In an implementation, after step 201, the method may further include the following step 205, step 206, and step 209, or include step 207, step 208, and step 209.

Step 205: The second base station sends the first information to a terminal. Correspondingly, the terminal receives the first information.

After receiving the first information, the terminal may determine a measurement bandwidth value based on the first information.

Step 206: The terminal determines the measurement bandwidth value.

In an implementation, when the network-based CRS bandwidth mitigation status information of the first base station indicates a bandwidth mitigation value, the terminal determines the bandwidth mitigation value as the measurement bandwidth value. For example, if the network-based CRS bandwidth mitigation status information of the first base station included in the first information sent by the second base station to the terminal is 6 RBs, the terminal may determine the measurement bandwidth value to be 6 RBs.

In another implementation, when the network-based CRS bandwidth mitigation status information of the first base station indicates the mitigated state, the terminal determines one of a plurality of bandwidth mitigation values corresponding to the mitigated state as the measurement bandwidth value. For example, it is negotiated in advance that "1" indicates that the network-based CRS bandwidth mitigation status of the first base station is the mitigated state, and "0" indicates that the network-based CRS bandwidth mitigation status of the first base station is the unmitigated state. In addition, the bandwidth mitigation values corresponding to the mitigated state are preset to {6 RBs, 5 RBs, 4 RBs}. In this way, when the network-based CRS bandwidth mitigation status information of the first base station is "1", the terminal determines that the network-based CRS bandwidth mitigation status information of the first base station indicates the mitigated state, and determines one of {6 RBs, 5 RBs, 4 RBs} as the measurement bandwidth value. For example, random selection may be performed, or selection is performed based on a largest quantity of use times. For example, if 5 RBs are selected, the terminal determines that the measurement bandwidth value is 5 RBs.

It should be noted that in step 206 of this application, in an implementation, the terminal may determine a measurement bandwidth value for each neighboring cell, and then measure the neighboring cell based on the measurement bandwidth value; and similarly, the terminal may determine a measurement bandwidth value for a serving cell of the terminal, and then measure the serving cell based on the measurement bandwidth value. In another implementation, the terminal may further determine one measurement bandwidth value for a serving cell of the terminal and all neighboring cells of the serving cell, and then measure the serving cell of the terminal and all the neighboring cells of the serving cell based on the measurement bandwidth value. During specific implementation, the terminal may measure only the serving cell, or measure only the neighboring cell of the serving cell, or measure both the serving cell and the neighboring cell of the serving cell.

In another implementation, if the second base station also has the network-based CRS bandwidth mitigation capability, the second base station may further send the network-based CRS bandwidth mitigation status information of the second base station to the terminal, and then the terminal determines the measurement bandwidth value based on the first information and the network-based CRS bandwidth mitigation status information of the second base station. For example, when the network-based CRS bandwidth mitigation status information of the first base station indicates a first bandwidth mitigation value, and the network-based CRS bandwidth mitigation status information of the second base station indicates a second bandwidth mitigation value, the terminal may determine a larger one or a smaller one of the first bandwidth mitigation value and the second bandwidth mitigation value as the measurement bandwidth value.

Step 207: The second base station determines a measurement bandwidth value.

For a method for determining the measurement bandwidth value by the second base station based on the first information in step 207, refer to the method for determining the measurement bandwidth value by the terminal in step 206. Details are not described herein again.

Step 208: The second base station sends the measurement bandwidth value to the terminal. Correspondingly, the terminal receives the measurement bandwidth value.

If the method in step 206 and step 207 is used, the second base station sends the first information to the terminal, and the terminal determines the measurement bandwidth value.

If the method in step 208 and step 209 is used, the second base station determines the measurement bandwidth value, and then sends the measurement bandwidth value to the terminal.

Step 209: The terminal measures, based on the measurement bandwidth value, at least one of signal strength or signal quality of the serving cell in which the terminal is located or the neighboring cells of the serving cell.

When the measurement bandwidth value is a bandwidth value of the first base station in the mitigated state, because the bandwidth is a part of an entire bandwidth occupied by the first base station, measurement overheads of the terminal can be reduced during measurement.

According to the foregoing method, on one hand, the first base station may send the network-based CRS bandwidth mitigation status information of the first base station to the second base station, and the first base station may further send the network-based cell-specific reference signal CRS bandwidth mitigation capability of the first base station to the second base station, thereby implementing synchronization of the mitigation information between the first base station and the second base station (for example, the network-based CRS bandwidth mitigation status information of the first base station or the network-based CRS bandwidth mitigation capability information of the first base station). On the other hand, synchronization of the bandwidth mitigation status information between the first base station and the terminal is further implemented, so that the terminal can re-determine the measurement bandwidth value based on the bandwidth mitigation status information, and perform cell measurement based on the re-determined measurement bandwidth value, to reduce measure overheads of the terminal.

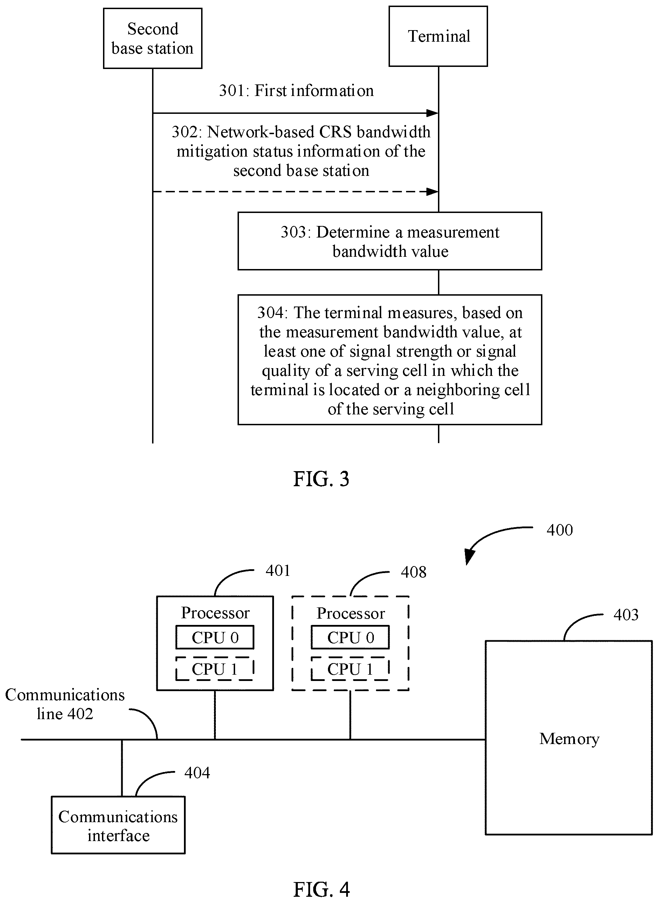

FIG. 3 shows another communication method according to this application. The method may be jointly implemented with the communication method shown in FIG. 2, or may be independently implemented. This is not limited in this application. The communication method shown in FIG. 3 includes the following steps.

Step 301: A second base station sends first information to a terminal. Correspondingly, the terminal receives the first information.

The first information is the first information in the embodiment shown in FIG. 2.

In an alternative implementation, step 301 may alternatively be: A first base station broadcasts first information to a terminal. In the method, the first base station may send the first information to the terminal in a broadcast manner.

Optionally, if the second base station has a network-based CRS bandwidth mitigation capability, the method may further include the following step 302.

Step 302: The second base station sends network-based CRS bandwidth mitigation status information of the second base station to the terminal. Correspondingly, the terminal receives the network-based CRS bandwidth mitigation status information of the second base station.

Step 303: The terminal determines a measurement bandwidth value.

A method for implementing step 303 is the same as that for implementing step 206, and refer to the foregoing description.

Step 304: The terminal measures, based on the measurement bandwidth value, at least one of signal strength or signal quality of a serving cell in which the terminal is located or a neighboring cell of the serving cell.

When the measurement bandwidth value is a bandwidth value of the first base station in a mitigated state, because the bandwidth is a part of an entire bandwidth occupied by the first base station, measurement overheads of the terminal can be reduced during measurement.

According to the foregoing communication method, the terminal can obtain network-based cell-specific reference signal CRS bandwidth mitigation status information of the first base station, thereby implementing synchronization of the bandwidth mitigation status information between the first base station and the terminal. Further, the terminal can re-determine the measurement bandwidth value based on the bandwidth mitigation status information, and perform cell measurement based on the re-determined measurement bandwidth value, so that measurement overheads of the terminal can be reduced.

Based on a same invention concept, FIG. 4 is a schematic diagram of an apparatus according to this application. The apparatus may be a terminal, a base station, or a chip, and may perform the method in any one of the foregoing embodiments.

The apparatus 400 includes at least one processor 401, a communications line 402, a memory 403, and at least one communications interface 404.

The processor 401 may be a central processing unit (central processing unit, CPU), a microprocessor, an application-specific integrated circuit (application specific integrated circuit, ASIC), or one or more integrated circuits configured to control a program to perform the solutions in this application.

The communications line 402 may include a pathway for transmitting information between the foregoing components.

The communications interface 404 is any apparatus such as a transceiver, and is configured to communicate with another device or a communications network, such as Ethernet, a radio access network (radio access network, RAN), a wireless local area network (wireless local area network, WLAN), or a wireline access network.

The memory 403 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc memory, an optical disc memory (including a compact disc, a laser disc, an optical disc, a digital versatile disc, a Blu-ray disc, and the like), a magnetic disk storage medium or another magnetic storage device, or any other medium that can carry or store expected program code in a form of an instruction or a data structure and that can be accessed by a computer. However, this is not limited thereto. The memory may exist independently, and is connected to the processor through the communications line 402. Alternatively, the memory may be integrated with the processor.

The memory 403 is configured to store a computer-executable instruction for performing the solutions in this application, and the processor 401 controls the performing. The processor 401 is configured to execute the computer-executable instruction stored in the memory 403, to implement the communication method provided in the foregoing embodiments of this application.

Optionally, the computer executable instruction in the embodiments of this application may also be referred to as application program code. This is not specifically limited in the embodiments of this application.

During specific implementation, in an embodiment, the processor 401 may include one or more CPUs, for example, a CPU 0 and a CPU 1 in FIG. 4.

During specific implementation, in an embodiment, the apparatus 400 may include a plurality of processors, for example, the processor 401 and a processor 408 in FIG. 4. Each of the processors may be a single-CPU (single-CPU) processor, or may be a multi-CPU (multi-CPU) processor. The processor herein may be one or more devices, circuits, and/or processing cores configured to process data (for example, a computer program instruction).

When the apparatus shown in FIG. 4 is a chip, for example, a chip of a terminal or a chip of a base station (the first base station or the second base station), the chip includes the processor 401 (and may further include the processor 408), the communications line 402, the memory 403, and the communications interface 404. Specifically, the communications interface 404 may be an input interface, an input pin, an input circuit, or the like. The memory 403 may be a register, a cache, or the like. The processor 401 and the processor 408 may each be a general-purpose CPU, a microprocessor, an ASIC, or one or more integrated circuits configured to control a program to perform a communication method in any one of the foregoing embodiments.

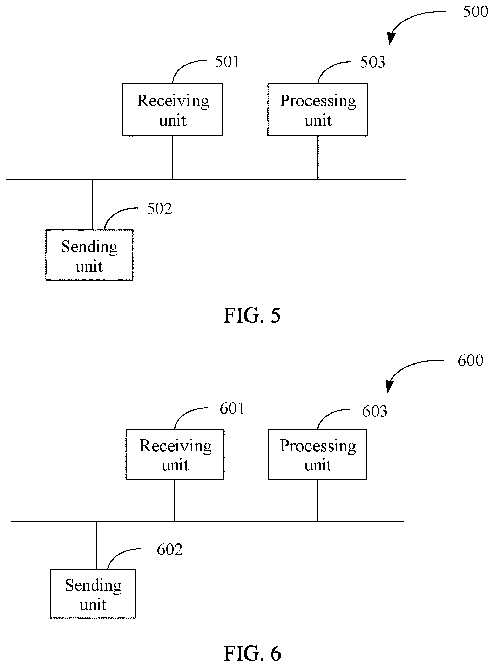

In this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, module division in this application is an example and is merely a logical function division. During actual implementation, another division manner may be used. For example, FIG. 5 is a schematic diagram of an apparatus when each functional module is obtained through division based on each corresponding function. The apparatus 500 may be the terminal in the foregoing embodiments, or a chip of the terminal. The apparatus 500 includes a receiving unit 501, a sending unit 502, and a processing unit 503.

The receiving unit 501 is configured to receive first information from a second base station, where the first information includes network-based cell-specific reference signal CRS bandwidth mitigation status information of a first base station, the second base station is a base station of a serving cell of the terminal apparatus, and the first base station is a base station of a neighboring cell of the serving cell.

The processing unit 503 is configured to determine a measurement bandwidth value based on at least the first information, and measure, based on the measurement bandwidth value, at least one of signal strength or signal quality of the serving cell in which the terminal apparatus is located or the neighboring cell of the serving cell.

In a possible implementation, the processing unit 503 is specifically configured to:
when the network-based CRS bandwidth mitigation status information of the first base station indicates a bandwidth mitigation value, determine the bandwidth mitigation value as the measurement bandwidth value; or
when the network-based CRS bandwidth mitigation status information of the first base station indicates a mitigated state, determine one of at least two bandwidth mitigation values corresponding to the mitigated state as the measurement bandwidth value.

In a possible implementation, the receiving unit 501 is further configured to receive network-based CRS bandwidth mitigation status information of the second base station from the second base station.

The processing unit 503 is specifically configured to determine the measurement bandwidth value based on the first information and the network-based CRS bandwidth mitigation status information of the second base station.

It should be understood that the apparatus may be configured to implement the steps performed by the terminal in the methods in the embodiments of the present invention. For related features, refer to the foregoing descriptions. Details are not described herein again.

Specifically, functions/implementation processes of the receiving unit 501, the processing unit 503, and the sending unit 502 in FIG. 5 may be implemented by the processor 401 in FIG. 4 by invoking the computer executable instruction stored in the memory 403. Alternatively, a function/implementation process of the processing unit 503 in FIG. 5 may be implemented by the processor 401 in FIG. 4 by invoking the computer executable instruction stored in the memory 403, and functions/implementation processes of the receiving unit 501 and the sending unit 502 in FIG. 5 may be implemented by the communications interface 404 in FIG. 4.

Optionally, when the apparatus 500 is a chip or a circuit, functions/implementation processes of the receiving unit 501 and the sending unit 502 may be implemented by a pin, a circuit, or the like. Optionally, when the apparatus 500 is a chip, the memory 403 may be a storage unit, for example, a register or a cache, in the chip. Certainly, when the apparatus 500 is the terminal, the memory 403 may be a storage unit that is inside the terminal and outside the chip. This is not specifically limited in this embodiment of this application.

In this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, module division in this application is an example and is merely a logical function division. During actual implementation, another division manner may be used. For example, FIG. 6 is a schematic diagram of an apparatus when each functional module is obtained through division based on each corresponding function. The apparatus 600 may be the first base station or the second base station in the foregoing embodiments, or a chip of the first base station or of the second base station. The apparatus 600 includes a receiving unit 601, a sending unit 602, and a processing unit 603.

When the apparatus 600 is the first base station, the sending unit 602 is configured to send first information to a second base station, where the first information includes network-based cell-specific reference signal CRS bandwidth mitigation status information of the first base station, the second base station is a base station of a serving cell of a terminal apparatus, and the first base station is a base station of a neighboring cell of the serving cell.

In a possible implementation, the sending unit 602 is configured to send the first information to the second base station when at least one of the following conditions is met: CRS configuration of the first base station changes; and the receiving unit 601 receives first request information from the second base station, where the first request information is used to indicate the first base station to send the network-based CRS bandwidth mitigation status information of the first base station to the second base station.

In a possible implementation, the sending unit 602 is specifically configured to periodically send the first information to the second base station.

In a possible implementation, the sending unit 602 is further configured to send second information to the second base station, where the second information includes network-based CRS bandwidth mitigation capability information of the first base station.

In a possible implementation, the receiving unit 601 is configured to receive second request information from the second base station, and the second request information is used to indicate the first base station to send the network-based CRS bandwidth mitigation capability information of the first base station to the second base station.

In a possible implementation, the receiving unit 601 is further configured to receive third information from the second base station, where the third information is used to notify that the first information is received.

In a possible implementation, the receiving unit 601 is further configured to receive fourth information from the second base station, where the fourth information is used to notify that the second information is received.

When the apparatus 600 is the second base station, the receiving unit 601 is configured to receive first information from a first base station, where the first information includes network-based cell-specific reference signal CRS bandwidth mitigation status information of the first base station, the second base station is a base station of a serving cell of a terminal apparatus, and the first base station is a base station of a neighboring cell of the serving cell.

In a possible implementation, the sending unit 602 is configured to send first request information to the first base station, where the first request information is used to indicate the first base station to send the network-based CRS bandwidth mitigation status information of the first base station to the second base station; and the receiving unit 601 is further configured to receive the first information from the first base station.

In a possible implementation, the receiving unit 601 is further configured to receive second information from the first base station, where the second information includes network-based CRS bandwidth mitigation capability information of the first base station.

In a possible implementation, the sending unit 602 is configured to send second request information to the first base station, where the second request information is used to indicate the first base station to send the network-based CRS bandwidth mitigation capability information of the first base station to the second base station.

In a possible implementation, the sending unit 602 is configured to send third information to the first base station, where the third information is used to notify that the first information is received.

In a possible implementation, the sending unit 602 is configured to send fourth information to the first base station, where the fourth information is used to notify that the second information is received.

In a possible implementation, the sending unit 602 is configured to send the first information to the terminal apparatus.

In a possible implementation, the processing unit 603 is configured to determine a measurement bandwidth value based on at least the first information, and the sending unit 602 is configured to send the measurement bandwidth value to the terminal apparatus.

In a possible implementation, the processing unit 603 is specifically configured to: when the network-based CRS bandwidth mitigation status information of the first base station is a bandwidth mitigation value, determine the bandwidth mitigation value as the measurement bandwidth value; or when the network-based CRS bandwidth mitigation status information of the first base station is a mitigated state, determine one of a plurality of bandwidth mitigation values corresponding to the mitigated state as the measurement bandwidth value.

It should be understood that the apparatus may be configured to implement the steps performed by the first base station or the second base station in the methods in the embodiments of the present invention. For related features, refer to the foregoing descriptions. Details are not described herein again.

Specifically, functions/implementation processes of the receiving unit 601, the processing unit 603, and the sending unit 602 in FIG. 6 may be implemented by the processor 401 in FIG. 4 by invoking the computer executable instruction stored in the memory 403. Alternatively, a function/implementation process of the processing unit 603 in FIG. 6 may be implemented by the processor 401 in FIG. 4 by invoking the computer executable instruction stored in the memory 403, and functions/implementation processes of the receiving unit 601 and the sending unit 602 in FIG. 6 may be implemented by the communications interface 404 in FIG. 4.

Optionally, when the apparatus 600 is a chip or a circuit, functions/implementation processes of the receiving unit 601 and the sending unit 602 may be implemented by a pin, a circuit, or the like. Optionally, when the apparatus 600 is a chip, the memory 403 may be a storage unit, for example, a register or a cache, in the chip. Certainly, when the apparatus 600 is the first base station or the second base station, the memory 403 may be a storage unit that is inside the first base station or the second base station, and outside the chip. This is not specifically limited in this embodiment of this application.

All or some of the foregoing embodiments may be implemented by using software, hardware, firmware, or any combination thereof. When software is used to implement the embodiments, the embodiments may be implemented all or partially in a form of a computer program product. The computer program product includes one or more computer instructions. When the computer program instructions are loaded and executed on a computer, the procedures or functions according to the embodiments of the present invention are all or partially generated. The computer may be a general-purpose computer, a special-purpose computer, a computer network, or another programmable apparatus. The computer instructions may be stored in a computer-readable storage medium or may be transferred from a computer-readable storage medium to another computer-readable storage medium. For example, the computer instructions may be transferred from a website, computer, server, or data center to another website, computer, server, or data center in a wired manner (for example, by using a coaxial cable, an optical fiber, or a digital subscriber line (DSL)) or in a wireless manner (for example, by using infrared, radio, or microwave). The computer-readable storage medium may be any usable medium accessible to the computer, or may be a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The various illustrative logical units and circuits described in the embodiments of the present invention may implement or operate the described functions by using a general processor, a digital signal processor, an application-specific integrated circuit (ASIC), a field programmable gate array (FPGA) or another programmable logical apparatus, a discrete gate or transistor logic, a discrete hardware component, or a design of any combination thereof. The general processor may be a microprocessor. Optionally, the general processor may also be any traditional processor, controller, micro-controller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in the embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For an example, the storage medium may be connected to a processor so that the processor may read information from the storage medium and write information to the storage medium. Alternatively, the storage medium may further be integrated into a processor. The processor and the storage medium may be set in an ASIC, and the ASIC may be set in a terminal device. Alternatively, the processor and the storage medium may also be arranged in different components of the terminal device.

The computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although the present invention is described with reference to specific features and the embodiments thereof, it is clear that various modifications and combinations may be made to them without departing from the spirit and scope of the present invention. Correspondingly, the specification and accompanying drawings are merely description of examples of the present invention defined by the accompanying claims, and is considered as any of or all modifications, variations, combinations or equivalents that cover the scope of the present invention. It is clear that, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A communication method, comprising:
receiving, by a terminal apparatus, first information from a second base station, wherein the first information comprises network-based cell-specific reference signal CRS bandwidth mitigation status information of a first base station, the second base station is a base station of a serving cell of the terminal apparatus, and the first base station is a base station of a neighboring cell of the serving cell;
determining, by the terminal apparatus, a measurement bandwidth value based on at least the first information; and
measuring, by the terminal apparatus based on the measurement bandwidth value, at least one of signal strength or signal quality of the serving cell in which the terminal apparatus is located or the neighboring cell of the serving cell.

2. The method according to claim 1, wherein the determining, by the terminal apparatus, a measurement bandwidth value based on at least the first information comprises:
when the network-based CRS bandwidth mitigation status information of the first base station indicates a bandwidth mitigation value, determining, by the terminal apparatus, the bandwidth mitigation value as the measurement bandwidth value; or
when the network-based CRS bandwidth mitigation status information of the first base station indicates a mitigated state, determining, by the terminal apparatus, one of at least two bandwidth mitigation values corresponding to the mitigated state as the measurement bandwidth value.

3. The method according to claim 1 or 2, wherein the method further comprises:
receiving, by the terminal apparatus from the second base station, network-based CRS bandwidth mitigation status information of the second base station; and
the determining, by the terminal apparatus, a measurement bandwidth value based on at least the first information comprises:
determining, by the terminal apparatus, the measurement bandwidth value based on the first information and the network-based CRS bandwidth mitigation status information of the second base station.

4. A communication method, comprising:
sending, by a first base station, first information to a second base station, wherein the first information comprises network-based cell-specific reference signal CRS bandwidth mitigation status information of the first base station, the second base station is a base station of a serving cell of a terminal apparatus, and the first base station is a base station of a neighboring cell of the serving cell.

5. The method according to claim 4, wherein the first base station sends the first information to the second base station when at least one of the following conditions is met:
CRS configuration of the first base station changes; and
the first base station receives first request information from the second base station, wherein the first request information is used to indicate the first base station to send the network-based CRS bandwidth mitigation status information of the first base station to the second base station.

6. The method according to claim 4, wherein the sending, by a first base station, first information to a second base station comprises:
periodically sending, by the first base station, the first information to the second base station.

7. The method according to any one of claims 4 to 6, wherein the method further comprises:
sending, by the first base station, second information to the second base station, wherein the second information comprises network-based CRS bandwidth mitigation capability information of the first base station.

8. The method according to claim 7, wherein the method further comprises:
receiving, by the first base station, second request information from the second base station, wherein the second request information is used to indicate the first base station to send the network-based CRS bandwidth mitigation capability information of the first base station to the second base station.

9. A communication method, comprising:
receiving, by a second base station, first information from a first base station, wherein the first information comprises network-based cell-specific reference signal CRS bandwidth mitigation status information of the first base station, the second base station is a base station of a serving cell of a terminal apparatus, and the first base station is a base station of a neighboring cell of the serving cell.

10. The method according to claim 9, wherein the receiving, by a second base station, first information from a first base station comprises:
sending, by the second base station, first request information to the first base station, wherein the first request information is used to indicate the first base station to send the network-based CRS bandwidth mitigation status information of the first base station to the second base station; and
receiving, by the second base station, the first information from the first base station.

11. The method according to claim 9 or 10, wherein the method further comprises:
receiving, by the second base station, second information from the first base station, wherein the second information comprises network-based CRS bandwidth mitigation capability information of the first base station.

12. The method according to claim 11, wherein the method further comprises:
sending, by the second base station, second request information to the first base station, wherein the second request information is used to indicate the first base station to send the network-based CRS bandwidth mitigation capability information of the first base station to the second base station.

13. The method according to any one of claims 9 to 12, wherein the method further comprises:
sending, by the second base station, the first information to the terminal apparatus.

14. The method according to any one of claims 9 to 12, wherein the method further comprises:
determining, by the second base station, a measurement bandwidth value based on at least the first information; and
sending, by the second base station, the measurement bandwidth value to the terminal apparatus.

15. A terminal apparatus, comprising a receiving unit and a processing unit, wherein
the receiving unit is configured to receive first information from a second base station, wherein the first information comprises network-based cell-specific reference signal CRS bandwidth mitigation status information of a first base station, the second base station is a base station of a serving cell of the terminal apparatus, and the first base station is a base station of a neighboring cell of the serving cell; and
the processing unit is configured to determine a measurement bandwidth value based on at least the first information, and measure, based on the measurement bandwidth value, at least one of signal strength or signal quality of the serving cell in which the terminal apparatus is located or the neighboring cell of the serving cell.

16. The apparatus according to claim 15, wherein the processing unit is specifically configured to:
when the network-based CRS bandwidth mitigation status information of the first base station indicates a bandwidth mitigation value, determine the bandwidth mitigation value as the measurement bandwidth value; or
when the network-based CRS bandwidth mitigation status information of the first base station indicates a mitigated state, determine one of at least two bandwidth mitigation values corresponding to the mitigated state as the measurement bandwidth value.

17. The apparatus according to claim 15 or 16, wherein the receiving unit is further configured to receive, from the second base station, network-based CRS bandwidth mitigation status information of the second base station; and
the processing unit is specifically configured to determine the measurement bandwidth value based on the first information and the network-based CRS bandwidth mitigation status information of the second base station.

18. An apparatus, applied to a first base station and comprising a sending unit, wherein the sending unit is configured to send first information to a second base station, wherein the first information comprises network-based cell-specific reference signal CRS bandwidth mitigation status information of the first base station, the second base station is a base station of a serving cell of a terminal apparatus, and the first base station is a base station of a neighboring cell of the serving cell.

19. The apparatus according to claim 18, wherein the sending unit is configured to send the first information to the second base station when at least one of the following conditions is met:
CRS configuration of the first base station changes; and
the apparatus further comprises a receiving unit, wherein the receiving unit receives first request information from the second base station, wherein the first request information is used to indicate the first base station to send the network-based CRS bandwidth mitigation status information of the first base station to the second base station.

20. The apparatus according to claim 18, wherein the sending unit is specifically configured to periodically send the first information to the second base station.

21. The apparatus according to any one of claims 18 to 20, wherein the sending unit is further configured to send second information to the second base station, wherein the second information comprises network-based CRS bandwidth mitigation capability information of the first base station.

22. The apparatus according to claim 21, wherein the apparatus further comprises a receiving unit configured to receive second request information from the second base station, wherein the second request information is used to indicate the first base station to send the network-based CRS bandwidth mitigation capability information of the first base station to the second base station.

23. Abase station, comprising the apparatus according to any one of claims 18 to 22.

24. An apparatus, applied to a second base station and comprising a receiving unit, wherein the receiving unit is configured to receive first information from a first base station, wherein the first information comprises network-based cell-specific reference signal CRS bandwidth mitigation status information of the first base station, the second base station is a base station of a serving cell of a terminal apparatus, and the first base station is a base station of a neighboring cell of the serving cell.

25. The apparatus according to claim 24, wherein the apparatus further comprises a sending unit configured to send first request information to the first base station, wherein the first request information is used to indicate the first base station to send the network-based CRS bandwidth mitigation status information of the first base station to the second base station; and
the receiving unit is further configured to receive the first information from the first base station.

26. The apparatus according to claim 24 or 25, wherein the receiving unit is further configured to receive second information from the first base station, wherein the second information comprises network-based CRS bandwidth mitigation capability information of the first base station.

27. The apparatus according to claim 26, wherein the apparatus comprises a sending unit configured to send second request information to the first base station, wherein the second request information is used to indicate the first base station to send the network-based CRS bandwidth mitigation capability information of the first base station to the second base station.

28. The apparatus according to any one of claims 24 to 27, wherein the apparatus comprises a sending unit configured to send the first information to the terminal apparatus.

29. The apparatus according to any one of claims 24 to 25, wherein the apparatus comprises a sending unit and a processing unit, wherein
the processing unit is configured to determine a measurement bandwidth value based on at least the first information; and
the sending unit is configured to send the measurement bandwidth value to the terminal apparatus.

30. Abase station, comprising the apparatus according to any one of claims 24 to 29.
